# EUROPEAN PATENT SPECIFICATION

(11) **EP 1 594 742 B1**
(45) Date of publication and mention of the grant of the patent: **02.07.2008**
(21) Application number: 03814986.0
(22) Date of filing: 29.12.2003
(51) Int. Cl.: B65B 3/02

(54) **APPARATUS AND PROCESS FOR MANUFACTURING AND FILLING FLEXIBLE POUCHES**
VORRICHTUNG UND VERFAHREN ZUR HERSTELLUNG UND BEFÜLLUNG FLEXIBLER BEUTEL
APPAREIL ET PROCEDE DE FABRICATION ET DE REMPLISSAGE DE POCHES SOUPLES

(30) Priority: 27.12.2002 US 437026 P; 27.12.2002 US 437160 P
(43) Date of publication of application: 16.11.2005
(73) Proprietor: Advanced Plastics Technologies Luxembourg S.A., 1150 Luxembourg (LU)
(72) Inventor: HUTCHINSON, Gerald, A., Coto de Caza, CA 92679 (US); LEE, Robert, A., Bowdon, Cheshire WA14 3JP (GB)
(74) Representative: Polypatent
(86) International application number: PCT/US2003/041445
(87) International publication number: WO 2004/060748

(56) References cited:
- EP-A- 0 950 606
- AU-A- 3 121 171
- GB-A- 1 237 344
- US-B1- 6 298 638
- US-B1- 6 393 803

## Description

The present invention relates to a process for the manufacture and filling of flexible pouches, wherein said pouches have one or more layers. More particularly, in multilayer pouches the layers are directly adhered to each other and are highly flexible yet strong such that they are suitable for various packaging applications. These pouches may be used as stand alone products or they may be used for lining containers.

Currently, flexible pouches are used as disposable packaging for liquids, liquid beverages, and liquid foods. These pouches preferably meet a number of performance criteria, including collapsibility, optical clarity, transparency, and sufficient mechanical strength to withstand the rigors of the use environment. Flexible pouches preferably provide a sufficient barrier to the passage of moisture vapor and other gasses to prevent contamination of the items contained therein.

A multilayer film which is commonly used in flexible pouch applications is aluminum coated polyethylene or polypropylene. Other multilayer films are used such as those containing barrier polymers such as EVOH or MXD6 to prevent oxygen or carbon dioxide migration. Such film structures must be fabricated into pouches typically utilizing heat sealing/seam technology that is slow and difficult to fill. Delivery of the beverage contents can also be difficult with the required use of straws.

In certain applications, shipping boxes or other containers are often lined with a thin plastic liner to increase the shelf-life of foods or other perishable commodities, or to prevent leakage or spillage of product from a sealed shipping container. Such plastic liners are often in bag form. A number of methods and processes have been utilized to place the bag/liners into the box and then fill the bag. However, one major disadvantage of many of these processes are the slow filling speeds that can be accomplished.

US Patent No. 6,393,803 discloses a process and an apparatus for blowmolding, filling, closing and applying a coating to plastic containers blown from preforms having neck finishes, wherein the neck portion of the preform and bottle are used to handle the preform and bottle throughout the process. The containers produced with the process according to US 6,393,803 are rigid and self-supportingly stiff beverage containers which as such are known in the art.

It is therefore an object of the present invention to provide a quick and reliable method and apparatus for manufacturing and filling flexible pouches.

This object is achieved by a process for manufacturing and filling flexible pouches, the process comprising blow-molding a preform having a neck portion into a flexible, collapsible, non-self supportive pouch having a neck finish filling said flexible pouch with the desired product, closing or capping the filter pouch, wherein the neck portion of the preform and the pouch are used to handle the preform and pouch throughout the process.

This object is also achieved by an apparatus according to the invention as defined in appended claim 11 which comprises a system which places the flexible pouch into a rigid container.

### Summary of the Invention

In one embodiment, there is provided a process for manufacturing and filling flexible pouches in a continuous production line. This process allows for an increase in the manufacturing and filling speeds, thereby greatly reducing the production costs, preferably such that the process is commercially viable. In a preferred embodiment, a continuous production line begins with a preform having a neck portion and a body such as may be used to make bottles. The preform is blow molded into a flexible pouch. The pouch is filled with the desired product, and then closed or capped for final use. In one embodiment, the filled pouch is further dressed, decorated and/or inserted into a rigid outer container, for example a box. In one embodiment, the production line is a modified version of the type commonly used for handling rigid containers, such as those used to manufacture and fill soft drinks, wherein the system is modified to handle the flexible pouches using the neck portion.

The pouch may be a monolayer or multilayer collapsible pouch having a neck finish. In a preferred embodiment the inner layer of the pouch comprises polyethylene terephthalate ("PET") or polypropylene. In one embodiment, the polypropylene is preferably clarified polypropylene. In other embodiments, suitable inner layer materials include, but are not limited to, various polymers such as polyesters, polyolefins, including polypropylene and polyethylene, polycarbonate, polyamides, including nylons, or acrylics. These materials may be used alone or in conjunction with each other.

The PET of certain embodiments includes, but is not limited to, modified PET as well as PET blended with other materials. One example of a modified PET is "high IPA PET" or IPA-modified PET wherein the PET contains high IPA (isophthalic acid) levels to provide processing advantages such as reduced crystallinity. Other examples include, but are not limited to, high stretch PET, recycled high stretch PET, and recycled PET.

In other embodiments, suitable pouches will have one or more exterior layers comprising a materials including, but not limited to, polyethylene, polypropylene, modified polyolefins, modified elastomers, polystyrene, thermoplastic polyurethane, Copolyester Barrier Materials, Phenoxy-type Thermoplastics, polyamides, polyethylene naphthalate, polyethylene naphthalate copolymers, polyethylene naphthalate/polyethylene terephthalate blends, polyethylene terephthalate, compatibilized polymer blends, and combinations thereof. In another embodiment, exterior layers are provided as foamed layers utilizing either physical or chemical blowing agents.

In one embodiment, a multilayer pouch having a neck finish comprises (a) a first interior layer comprising polyethylene terephthalate; (b) a second exterior layer comprising polyolefins, modified elastomers, polystyrene, thermoplastic polyurethane; wherein said pouch is fabricated by suitable blow molding operations of preforms. In another embodiment, exterior layers are provided as foamed layers utilizing either physical or chemical blowing agents. The pouch of preferred embodiments further comprises a bottle neck finish that can be filled in suitable filling lines at high outputs. The bottle neck finish of one embodiment is preferably threaded or crowned. In embodiments utilizing a crowned bottle neck finish, the crown type neck finish preferably is of the type capable of receiving a snap-on open/close fitment. In one embodiment, a preferred pouch may further comprise a "push-pull" or a non-spill fitment, or other suitable bottle closure.

In one embodiment, preforms having a neck finish suitable for blow molding into flexible pouches having a neck finish may be prepared by conventional methods known to those of skill in the art, including, but not limited to, overmolding, co-injection, and inject-over-inject methods. For example, the methods disclosed in U.S. Patent No. 6,352,426, filed April 21, 1999, U.S. Patent No. 6,391,408, filed October 19, 1998, U.S. Patent No. 6,312,641, filed October 17, 1997, U.S. Patent App. Serial No. 10/090,471 filed March 4, 2002, PCT publication WO03/080731 corresponding to U.S. Patent App. Serial No. 10/395,899 filed March 21, 2003, and U.S. Patent App. Serial No. 10/614,731 filed July 3, 2003, may be used.

In one embodiment, a manufacturing and filling line comprises various modules or systems connected together using a conveyor/handler/transporter that holds the flexible pouches by the neck portion. Suitable systems include, but are not limited to, handling, manufacturing, and filling systems. In one embodiment an apparatus for making and filling flexible pouches comprises: (a) a handling system that conveys the flexible pouches through a manufacturing and filling system; (b) a manufacturing system comprising a preform with a neck finish; and a blow molding machine wherein said preform is blow molded into a flexible pouch having a neck finish; and (c) a filling system comprising a filling machine wherein said flexible pouch is filled with a desired product, and a closing or capping machine wherein said filled flexible pouch is closed; wherein the handling system conveys the preforms and flexible pouches throughout the entire system using the neck portion.

In another embodiment, a preferred manufacturing and filling line further comprises decorating, dressing, and/or inserting the pouch into a rigid container. The pouch may be dressed, decorated, and/or inserted into a rigid container before or after the pouch is filled.

In another embodiment, a preferred manufacturing and filling line further comprises decorating, dressing, and/or inserting the pouch into a rigid container. The pouch may be dressed, decorated, and/or inserted into a rigid container before or after the pouch is filled.

### Brief Description of the Drawing

FIGURE 1 illustrates a non-limiting embodiment of a preferred production line.
FIGURE 2 illustrates a non-limiting embodiment of a preferred preform.

### Detailed Description of Preferred Embodiments

As can be appreciated, a continual need exists in the art for flexible pouches having increased strength and flexibility, ease in filling, and a reliable delivery mechanism to prevent spillage. At the same time, such pouches must be able to provide other properties that may be necessary for the particular application, e.g., good optical properties, chemical neutrality, strength, rigidity, and resistance to leakage. There is also a need for a process which allows for high speed filling of flexible pouches that can be performed in an economical manner.

In one embodiment, there is disclosed a process for manufacturing and filling flexible pouches in a continuous production line. This process allows for an increase in the manufacturing and filling speeds, thereby greatly reducing the production costs rendering the process economically feasible. In a preferred embodiment, one continuous production line begins with a preform of the type commonly used to make bottles, the preform is then blow molded into a flexible pouch, the pouch is filled with the desired product, and then closed for final use. In one embodiment, the filled pouch is then further dressed, decorated and/or inserted into a rigid outer container, for example a box. In other embodiments, the pouch is placed into a rigid outer container prior to filling and/or dressed, decorated. In a preferred embodiment, the production line is a modified version of the type used for handling rigid containers, such as those used to manufacture and fill soft drinks. A preferred filling process is of the type known in the art for filling PET bottles. Such systems include, but are not limited to, aseptic, hot fill, or chilled filling lines.

### A. Materials

### 1. Physical Characteristics of Preferred Pouches

One or more of the following advantages may be accorded by preferred embodiments. Lightweight pouches made from preforms that are blown on a stretch blow molding machine can be captured and held by the neck portion and directly transferred through each step of the manufacturing process. The pouches can be filled on current PET or glass filling lines with economic filling speed and little additional capital investment. Such filling lines can be designed to efficiently fill either conventional bottles or flexible pouches. This ability to capture the neck portion and transfer the flexible pouch throughout the filling and packaging process allows high speed handling of flexible pouches and significant reduction in manufacturing cost. Moreover, the neck finish of preferred embodiments avoids the need for expensive gable top materials known in the art for dispensing beverages.

Collapsibility is desirable to provide a more proper and complete drainage of the pouch. Unlike rigid liquid containers, which rely on air displacement for drainage, flexible pouches rely on collapsibility for drainage. As the pouch drains, atmospheric pressure collapses the pouch at a rate that is proportional to the rate of drainage. In this manner, the pouch can be fully drained. In order for the pouch to be collapsible, the pouch should have a flexible wall. If the wall is too stiff, the pouch will not drain fully. Thus, one consideration in the design of flexible pouches is that the wall structure preferably has sufficient flexibility and is collapsible enough to be fully drainable.

In certain embodiments, it is desirable to sterilize the flexible pouch, the pouch contents, or both the pouch and its contents prior to sending the filled pouch to the end user, e.g., a store or vending distributor. This helps to ensure that the pouch and its contents will be substantially free from contamination. Thus, another consideration of flexible pouches of certain embodiments is that the pouch preferably proceeds through the sterilization process without substantial deterioration.

Flexible pouches of preferred embodiments preferably have sufficient mechanical strength to withstand the abuse that is typically encountered in the use environment. Such environments include the filling lines, packaging and distribution systems, and end-user storage/transportation. The pouch preferably should be able to be used in these environments and under these conditions without substantial leakage, breakage, or spillage.

In embodiments wherein the flexible pouch is inserted into a rigid outer container, the pouch/rigid outer container system can be functionally optimized to provide various properties such as barrier against oxygen or CO₂ and hot fill properties.

### 2. Preform Details

In one embodiment, preforms suitable for blow molding into flexible pouches include, but are not limited to, monolayer or multilayer preforms including those that utilize barrier resins, oxygen scavengers, and antimicrobials. (see U.S. Patent No. 6,352,426, filed April 21, 1999, U.S. Patent No. 6,391,408, filed October 19, 1998, U.S. Patent No. 6,312,641, filed October 17, 1997, U.S. Patent App. Serial No. 10/090,471 filed March 4, 2002, PCT publication WO03/080731 corresponding to U.S. Patent App. Serial No. 10/395,899 filed March 21, 2003, and U.S. Patent App. Serial No. 10/614,731 filed July 3, 2003).

The pouch may be a monolayer or multilayer pouch. In a preferred embodiment the inner layer of the pouch comprises polyethylene terephthalate ("PET") or polypropylene. In one embodiment, the polypropylene is preferably clarified polypropylene. In addition to other aspects, single or multi layer pouches manufactured from polypropylene may also be utilized with products requiring elevated fill temperature or "hot fill." The PET of certain embodiments includes, but is not limited to, modified PET, recycled PET as well as PET blended with other materials. One example of a modified PET is "high IPA PET" or IPA-modified PET wherein the PET contains high IPA (isophthalic acid) levels to provide processing advantages such as reduced crystallinity. Another example is high stretch PET, wherein the PET has been modified so as to enhance its stretching capabilities.

Although preferred embodiments are described in terms of polyethylene terephthalate ("PET") or polypropylene, other suitable inner layer materials include, but are not limited to, various polymers such as polyesters, polyolefins, including polypropylene and polyethylene, polycarbonate, polyamides, including nylons, or acrylics. These materials may be used alone or in conjunction with each other.

In other embodiments, suitable pouches will have one or more exterior layers comprising one or more materials including, but not limited to, polyethylene, polypropylene, modified polyolefins, modified elastomers, polystyrene, thermoplastic polyurethane, Copolyester Barrier Materials, Phenoxy-type Thermoplastics, polyamides, polyethylene naphthalate, polyethylene naphthalate copolymers, polyethylene naphthalate/polyethylene terephthalate blends, polyethylene terephthalate, compatibilized polymer blends, and combinations thereof. In another embodiment, exterior layers are provided as foamed layers utilizing either physical or chemical blowing agents. Exterior layers may also comprise recycled materials.

"Phenoxy" resins, also referred to as "Phenoxy-type Thermoplastics," as those terms are used herein, include a wide variety of materials including those discussed in WO 99/20462. A further subset of phenoxy resins, and thermoplastic epoxy resins, are preferred hydroxy-phenoxyether polymers, of which polyhydroxyaminoether copolymers (PHAE) is a further preferred material. For example, suitable PHAE resins include BLOX resins available from The Dow Chemical Company, Midland, MI, USA. See for example, U.S. Pat. Nos. 6,455,116; 6,180,715; 6,011,111; 5,834,078; 5,814,373; 5,464,924; and 5,275,853; see also PCT Application Nos. WO 99/48962; WO 99/12995; WO 98/29491; and WO 98/14498. Other suitable subsets of phenoxy resins, and thermoplastic epoxy resins, include, but are not limited to, hydroxy-functional poly(amide-ethers) such as those described in U.S. Pat. Nos. 5,089,588 and 5,143,998, poly(hydroxy amide ethers) such as those described in U.S. Pat. No. 5,134,218, polyethers such as those described in U.S. Pat. Nos. 5,115,075 and 5,218,075, hydroxy-functional polyethers such as those as described in U.S. Pat. No. 5,164,472, hydroxy-functional poly(ether sulfonamides) such as those described in U.S. Pat. No. 5,149,768, poly(hydroxy ester ethers) such as those described in U.S. Pat. No. 5,171,820,

"Copolyester Barrier Materials" include copolyesters of terephthalic acid, isophthalic acid, and at least one diol having good barrier properties as compared to PET, such as those disclosed in U.S. Pat. No. 4,578,295 to Jabarin, and which are commercially available as B-010, B-030 and others of this family. (Mitsui Petrochemical Ind. Ltd., Japan);

Examples of preferred polyamide materials include MXD-6 from Mitsubishi Gas Chemical (Japan). Other preferred polyamide materials are blends of polyamide and polyester, including those comprising about 1-10% polyester by weight, where the polyester is preferably PET or a modified PET. The blends may be ordinary blends or they may be compatibilized with an antioxidant or other material. Examples of such materials include those described in U.S. Patent Application No. 10/395,899, filed March 21, 2003.

Polyamide materials may also be used as substrate materials.

Other preferred materials include, but are not limited to, polyamides, polyethylene naphthalate (PEN), PEN copolymers, PEN copolyester, PET/PEN blends, and combinations thereof. Preferred materials also include, but are not limited to, acrylic resins including polyacrylonitrile polymers, acrylonitrile styrene copolymers. PEN materials can be purchased from Shell Chemical Company.

In another embodiment, a compatibilized polymer blend, comprising polyamide, PET or a PET-containing copolymer, and at least one compatibilizer may be used as one or more layers of the preform/pouch, In a preferred embodiment, a compatibilized polymer blend comprises polyamide, preferably MXD-6, PET or a PET-containing copolymer, and at least one compatibilizer selected from IPA-modified PET and PET ionomer. (See U.S. App. No. 10/395,899, filed March 21, 2003)

In one embodiment, a multilayer pouch comprises (a) a first interior layer comprising polyethylene terephthalate, (b) a second exterior layer comprising one or more materials including, but not limited to, polyethylene, polypropylene, modified polyolefins, modified elastomers, polystyrene, and thermoplastic polyurethane, wherein said pouch is fabricated by suitable blow molding operations of preforms. In another embodiment, exterior layers are provided as foamed layers utilizing either physical or chemical blowing agents. The pouch of preferred embodiments further comprises a bottle neck finish that can be filled in suitable filling lines at high outputs. The bottle neck finish of one embodiment is preferably threaded or crowned. In embodiments utilizing a crowned bottle neck finish, the crown type neck finish preferably is of the type capable of receiving a snap-on open/close fitment. In one embodiment, a preferred pouch may further comprise a "push-pull" or a non-spill fitment, or other suitable bottle closure.

In one embodiment, preforms suitable for blow molding into flexible pouches may be prepared by conventional methods known to those of skill in the art, including, but not limited to, overmolding, co-injection, and inject-over-inject methods. For example, the methods disclosed in U.S. Patent No. 6,352,426, filed April 21, 1999, U.S. Patent No. 6,391,408, filed October 19, 1998, U.S. Patent No. 6,312,641, filed October 17, 1997, U.S. Patent App. Serial No. 10/090,471 filed March 4, 2002, PCT publication WO03/080731 corresponding to U.S. Patent App. Serial No. 10/395,899 filed March 21, 2003, and U.S. Patent App. Serial No. 10/614,731 filed July 3, 2003.

In one embodiment, overmolded preforms are preferably made using techniques described in detail in U.S. Patent No. 6,312,641 and PCT Publication Nos. WO 99/20462, WO 00/62998, and WO 01/40618. In embodiments wherein the preform is made by overmolding processes, the overmolding processes allow a high degree of process flexibility to allow for structural strength, accurate control of multilayer films, and a "no

### 3. Decoration

In one embodiment, the flexible pouches are further dressed, decorated, and/or inserted into a rigid outer container, for example a box. In preferred embodiments, the rigid outer container comprises a linerboard or molded fiber. In one embodiment, a pouch manufactured to be placed in an outer container may be manufactured with reduced weight as support will be provided by the outer container. For example, a 16 oz. (454 g) PET juice bottle with a 38 mm neck finish might have a total weight of 30 grams to provide the necessary support/structure for product handling, shipping, and storage as a bottle. However, a similar capacity pouch/liner can be blown with a reduced weight preform (for example, about 20 grams), as self-supporting container properties are provided to the pouch/liner by the outer container. In one embodiment, the pouch/liner may also be shaped such that air is easily vented when the filled pouch/liner is dropped into the box/container.

In one embodiment, the outer carton may comprise pre-treated or untreated materials. Preferably the outer carton exhibits one or more of the following characteristics: high wet strength, structural strength, and/or water repellency. In one embodiment, these properties can be accomplished with polymer impregnation or coating of the outer carton. In one embodiment, impregnation or coating with polyhydroxyaminoethers or PET can provide one or more of the desired properties as well as provide a recyclable container. (See WO 01/46523). In another embodiment, molded fiber articles with hinges may be utilized, again as either treated or untreated to enhance physical properties or appearances (graphics). The pouch of certain embodiments may be encapsulated by a pre-made molded fiber structure with the base of the molded fiber connected to the top by a hinge, and the two pieces glued together under the neck finish. In another embodiment, a heat shrink label can be applied on the molded fiber structure to impart one or more of the following properties: graphics, strength, and/or water protection properties.

Preferred external cartons/boxes can be constructed of various pulp or paper products without concern for direct food contact. In other embodiments, molded fiber constructions, old corrugated cardboard, unbleached or bleached pulp linerboards can be used as desired to provide exotic designs and shapes not possible with bottles. Coatings or multilayer laminate constructions of preferred embodiments can be designed for physical strength or exterior appearance without concern for direct food contact issues. Incorporating products like Kymene, phenoxy products, or sprayed PET emulsions can give the molded fiber structure structural strength and water repellency. This flexibility provides for optimum economics in providing a functional package at the lowest cost with the optimum appearance.

In one embodiment, the appearance and strength of the outside container can be further enhanced by film transfer coating as taught in U.S. Patent Nos. 5,603,996, 5,981,011, 6,132,822, 6,187,389 and 6,193,831 to Overcash et al. Properly formulated and applied transfer coatings can provide an image-receptive, high gloss, barrier coated surface to the container that is fully recyclable. These types of coatings can provide a metallized appearance while maintaining complete recyclability of the paperboard outer container. Further, holograms and other security features can be included in the film transfer coating to help safeguard against counterfeiting or to provide evidence of tampering.

The package can be designed to be fully recyclable unlike current plastic or paper gable top cartons. The package can be fully recycled by simply pulling the pouch/liner from the carton and separating the plastic liner from the carton/box for use in their respective recycle streams.

### B. Modified Production Line

As described above, in preferred embodiments, a continuous production line begins with a preform which is blow molded into a flexible pouch, the pouch is then filled with the desired product, and closed for final use. In one embodiment, the filled pouch is then further dressed, decorated, and/or inserted into a rigid outer container, for example a box. In other embodiments, the pouch is placed into a rigid outer container prior to filling. In a preferred embodiment, the production line is a modified version of the type commonly used for handling rigid containers, such as those used to manufacture and fill soft drinks. The production line of preferred embodiments is modified to handle the neck portion of the flexible pouch throughout the production line. A preferred filling process is of the type known in the art for filling PET bottles. Such systems include, but are not limited to, aseptic, hot fill, or chilled filling lines.

As previously described, the production line of preferred embodiments is a modified version of types commonly used for handling rigid containers. In conventional filling lines, once the preform is blow molded into a rigid container or bottle the container/bottle is placed onto a table top conveyor or forced air conveyor wherein the containers/bottles are in direct contact with each other. This type of conveyor is suitable for rigid containers/bottles as they are self supporting. However, given the nature of the flexible pouches of preferred embodiments, this type of handling is not feasible, especially if increased production speed is to be maintained. Accordingly, in order to handle the flexible pouches of preferred embodiments, the conventional production line is modified in order to handle the preform/pouches via the neck portion throughout the production process. This modification allows for high speed manufacturing and filling of flexible pouches on a system similar to those used for rigid containers. Advantageously, preferred embodiments modified handling systems may be used with conventional blow molders and filling systems. In preferred embodiments, suitable filling systems are known to those of skill in the art and may be of the type produced by Krones AG (Germany) or Sidel (Le Havre, France). For example, the Mecafill VKP-PET from Krones is a filling machine of the type suitable for use in preferred embodiments. Suitable blow molding machines of preferred embodiments are known to those of skill in the art and may be of the type produced by Sig Corpoplast (Germany). For example, the BLOMAX® Series III blow molding machine from Sig Corpoplast may be utilized in preferred embodiments. Moreover, the center line spacing of traditional production lines remain the same in preferred embodiments.

In preferred embodiments, the handling systems of conventional production lines are modified to handle the neck portion of the flexible pouches as individual units throughout the manufacturing and filling processes. The pouches of preferred embodiments are preferably transferred through the production line with a positive transfer system, that is a system that intentionally grasps the pouch at a specific point in the line every time. For example, the transfer system may grasp the pouch at the pilfer band of the neck finish at each transfer point. In other embodiments, the transfer system grasps the pouch at the neck cylinder or the support ring. Those of skill in the art will recognize that numerous points on the rigid neck portion provide suitable transfer points. Suitable transfer mechanisms of preferred embodiments include, but are not limited to, spring loaded forks, pistons gripping from within the pouch, and cylinders over the top of the neck finish. Other suitable transfer mechanisms are known to those of skill in the art. Suitable handling systems may be obtained from Procomac Packaging (Collecchio (PARMA) Italy). For example, in one embodiment, a CONVAIR 2000 handling system from Procomac may be used.

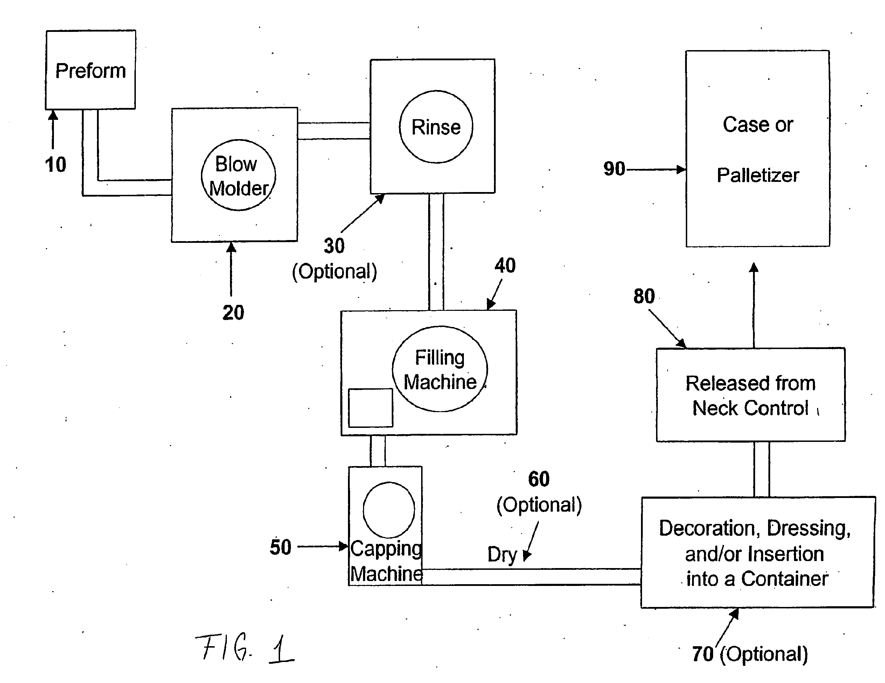

FIGURE 1 illustrates one embodiment of a preferred production line. The handling system which connects the stations in the system is indicated by pairs of parallel lines connecting the various components. In a preferred production line, a preform **10** enters the production line into the blow molding system where it is subsequently blow molded **20** into a flexible pouch. The pouch is then optionally rinsed **30** before proceeding to the filling system. Once in the filling system, the pouch is filled **40** with the desired product and capped **50.** The filled pouch may be optionally dried **60.** The pouch may be dressed, decorated and/or placed in a rigid exterior container **70** prior to being released from the neck portion handling system **80.** Alternatively, the dressing, decoration, and/or placing in an exterior container may take place at one or more other places in the production line, or may occur after the neck is released from the system. The pouches may then be sent to a case or palletizer **90** for distribution. Other components may be optionally included in the system.

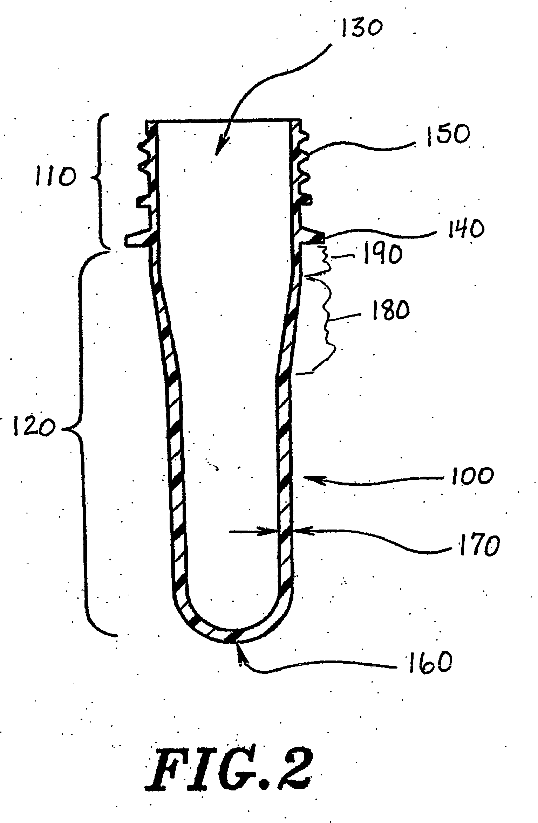

FIGURE 2 illustrates one embodiment a cross-section of a preferred preform **100.** The preform **100** comprises a neck finish **110** and a body portion **120.** The neck finish **110** begins at the opening **130** to the interior of the preform **100** and extends to and includes the support ring **140.** The neck finish **110,** in the illustrated embodiment, is further characterized by the presence of the threads **150,** which provide a way to fasten a cap for the bottle produced from the preform **100.** In other embodiments, the neck finish **110** may be non-threaded and/or otherwise adapted to receive a closure. Just under the neck finish **110** is the neck cylinder **190.** The neck finish together with the neck cylinder form what is referred to herein as the "neck portion", and comprise the portion of the preform by which the handling system preferably handles the preform. The body portion **120** is an elongated and preferably cylindrically shaped structure extending down from the neck cylinder **190,** through the transition **180** and culminating in the rounded end cap **160.**

In preferred pouches, the thickness of the pouch wall is thinner than a standard container or bottle which allows for a shorter cooling period after blow molding, thereby increasing production rates. For example, under conditions suitable for blow molding bottles/containers, each cavity of the blow molder produces approximately 1,500 containers per cavity. This can be increased to approximately 2,000 or more containers per cavity in preferred flexible pouch embodiments due to the decreased cooling time. In preferred embodiments, the average thickness of the flexible pouch sidewall ranges from about 0.003 to about 0.010 inches (about 0.0076 to about 0.025 centimeters). This shorter cooling time combined with the speed of rigid filling lines allows for preferred embodiments with production rates of up to 50,000 to 70,000 pouches per hour.

The various methods and techniques described above provide a number of ways to provide liners and containers comprising such liners. Of course, it is to be understood that not necessarily all objectives or advantages described may be achieved in accordance with any particular embodiment described herein. Thus, for example, those skilled in the art will recognize that the apparatus may be built and/or the methods may be performed in a manner that achieves or optimizes one advantage or group of advantages as taught herein without necessarily achieving other objectives or advantages as may be taught or suggested herein.

Furthermore, the skilled artisan will recognize the interchangeability of various features from different embodiments. Similarly, the various features and steps discussed above, as well as other known equivalents for each such feature or step, can be mixed and matched by one of ordinary skill in this art to perform methods in accordance with principles described herein.

Although the invention has been disclosed in the context of certain embodiments and examples, it will be understood by those skilled in the art that the invention extends beyond the specifically disclosed embodiments to other alternative embodiments and/or uses and obvious modifications and equivalents thereof within the scope of the appended claims. Accordingly, the invention is not intended to be limited by the specific disclosures of preferred embodiments herein.

## Claims

1. A process for manufacturing and filling flexible pouches, the process comprising:
blow molding a preform (10, 100) having a neck portion (110) into a flexible, collapsible, non-self supportive pouch having a neck finish (110);
filling said flexible pouch with a desired product; closing or capping the filled pouch; wherein the neck portion (110) of the preform (10, 100) and pouch are used to handle the preform (10, 100) and pouch throughout the process.

2. The process of Claim 1 wherein said process further comprises decorating and/or dressing the pouch.

3. The process of Claim 2 wherein said pouch is filled (40) prior to decorating and/or dressing of the pouch.

4. The process of Claim 1 wherein said process further comprises placing the pouch in a rigid container (90).

5. The process of Claim 4, wherein the pouch is supported by the container.

6. The process of Claim 4, wherein said pouch is filled prior to placing the pouch in a rigid container (90).

7. The process of Claim 4 wherein said rigid container (90) is a box.

8. The process of Claim 1 wherein said pouch has at least one layer.

9. The process of Claim 8 wherein at least one layer comprises polyethylene terephthalate or polypropylene.

10. The process of Claim 1 wherein said pouch has one or more exterior layers comprising a material selected from the group consisting of polyethylene, polypropylene, modified polyolefins, modified elastomers, polystyrene, thermoplastic polyurethane, copolyester barrier materials, phenoxy-type thermoplastics, polyamides, polyethylene naphthalate, polyethylene naphthalate copolymers, polyethylene naphthalate/polyethylene terephthalate blends, polyethylene terephthalate, compatibilized polymer blends, and combinations thereof.

11. An apparatus for making and filling flexible pouches comprising:
a handling system (80) that conveys preforms (10) and/or flexible,
collapsible, non-setf supportive pouches through a manufacturing and filling system; and a manufacturing system comprising a blow molding machine
(20); a filling system comprising: a filling machine (40) a closing or capping machine (50); a system which places the flexible pouch into a rigid container (90); wherein the handling system (80) conveys the preforms (10, 100) and
flexible pouches throughout the entire system by the neck portion (110); wherein said blow molding machine (20) blow molds a preform (10, 100)
with a neck (110) into a flexible pouch having a neck (110); wherein said
filling machine. (40) fills a flexible pouch with a desired product; and wherein said closing or capping machine (50) closes a filled flexible pouch.

12. The apparatus of Claim 11 wherein said apparatus further comprises a system which decorates and/or dresses the flexible pouch.

13. The apparatus of Claim 12 wherein said system which decorates and/or dresses the pouch is placed before the filling system (40).

14. The apparatus of Claim 11 wherein the flexible pouch is supported by the container.

15. The apparatus of Claim 11 wherein said system (80) which places the flexible pouch into a rigid container (90) is placed before the filling system (40).

16. The apparatus of Claim 11 wherein said rigid container (90) is a box.

17. The apparatus of Claim 11 wherein said pouch has at least one layer.

18. The apparatus of Claim 17 wherein at least one layer comprises polyethylene terephthalate or polypropylene.

19. The apparatus of Claim 11 wherein said pouch has one or more exterior layers comprising a material selected from the group consisting of polyethylene, polypropylene, modified polyolefins, modified elastomers, polystyrene, thermoplastic polyurethane, copolyester barrier materials, phenoxy-type thermoplastics, polyamides, polyethylene naphthalate, polyethylene naphthalate copolymers, polyethylene naphthalate/polyethylene terephthalate blends, polyethylene terephthalate, compatibilized polymer blends, and combinations thereof.

## Patentansprüche

1. Verfahren zur Herstellung und Befüllung flexibler Beutel, wobei das Verfahren umfasst:
Blasformen eines Vorformlings (10, 100) mit einem Halsabschnitt (110) in einen flexiblen, faltbaren, nicht selbsttragenden Beutel mit einem Halsabschluss (110);
Befüllen des flexiblen Beutels mit einem gewünschten Produkt;
Schließen oder Abdecken des befüllten Beutels;
wobei der Halsabschnitt (110) des Vorformlings (10, 100) und des Beutels dazu verwendet wird, den Vorformling (10, 100) und den Beutel während des Verfahrens zu handhaben.

2. Verfahren nach Anspruch 1, wobei das Verfahren weiterhin das Dekorieren und/oder die Nachbearbeitung des Beutels umfasst.

3. Verfahren nach Anspruch 2, wobei der Beutel vor dem Dekorieren und/oder der Nachbearbeitung des Beutels befüllt wird.

4. Verfahren nach Anspruch 1, wobei das Verfahren weiterhin das Platzieren des Beutels in einen starren Behälter (90) umfasst.

5. Verfahren nach Anspruch 4, wobei der Beutel durch den Behälter gestützt wird.

6. Verfahren nach Anspruch 4, wobei der Beutel vor dem Platzieren des Beutels in einem starren Behälter (90) befüllt wird.

7. Verfahren nach Anspruch 4, wobei der starre Behälter (90) eine Kiste ist.

8. Verfahren nach Anspruch 1, wobei der Beutel wenigstens eine Schicht aufweist.

9. Verfahren nach Anspruch 8, wobei wenigstens eine Schicht Polyethylen, Terephthalat oder Polypropylen umfasst.

10. Verfahren nach Anspruch 1, wobei der Beutel eine oder mehrere äußere Schichten aufweist, umfassend ein Material ausgewählt aus der Gruppe bestehend aus Polyethylen, Polypropylen, modifizierte Polyolefine, modifizierte Elastomere, Polystyrol, thermoplastisches Polyurethan, Copolyestergrenzmaterialien, phenoxy-artige Thermoplaste, Polyamide, Polyethylennaphthalat, Polyethylennaphthalat-Copolymere, Polyethylennaphthalat/Polyethylenterephthalatmischungen, Polyethylenterephthalat, verträglich gemachte Polymermischungen und Mischungen hiervon.

11. Vorrichtung zur Herstellung und Befüllung flexibler Beutel umfassend:
eine Handhabungsvorrichtung (80), welche die Vorformlinge (10) und/oder die flexiblen, faltbaren, nicht selbsttragenden Beutel durch eine Herstellungs- und Befüllungsvorrichtung fördert;
und eine Herstellungsvorrichtung umfassend eine Blasformvorrichtung (20);
eine Befüllungsvorrichtung umfassend eine Befüllungsmaschine (40) und
eine Schließ- oder Abdeckungsmaschine (50);
eine Vorrichtung, welche den flexiblen Beutel in einen starren Behälter platziert;
wobei die Handhabungsvorrichtung (80) die Vorformlinge (10, 100) und die flexiblen Beutel innerhalb der gesamten Vorrichtung an dem Halsabschnitt (110) befördert;
wobei die Blasformmaschine (20) einen Vorformling (10, 100) mit einem Hals (110) in einen flexiblen Beutel mit einem Hals (110) blasformt;
wobei die Befüllungsmaschine (40) einen flexiblen Beutel mit einem gewünschten Produkt befüllt;
und wobei die Schließ- oder Abdeckungsmaschine (50) einen befüllten flexiblen Beutel verschließt.

12. Vorrichtung nach Anspruch 11, wobei diese Vorrichtung weiterhin eine Vorrichtung umfasst, welche den flexiblen Beutel dekoriert und/oder nachbearbeitet.

13. Vorrichtung nach Anspruch 12, wobei die Vorrichtung, welche den Beutel dekoriert und/oder nachbearbeitet, vor der Befüllungsvorrichtung (40) angeordnet ist.

14. Vorrichtung nach Anspruch 11, wobei der flexible Beutel durch den Behälter gestützt ist.

15. Vorrichtung nach Anspruch 11, wobei die Vorrichtung (80), welche den flexiblen Beutel in einen starren Behälter (90) platziert, vor der Befüllungsvorrichtung (40) angeordnet ist.

16. Vorrichtung nach Anspruch 11, wobei der starre Behälter (90) eine Kiste ist.

17. Vorrichtung nach Anspruch 11, wobei der Beutel wenigstens eine Schicht aufweist.

18. Vorrichtung nach Anspruch 17, wobei wenigstens eine Schicht Polyethylen, Terephthalat oder Polypropylen umfasst.

19. Vorrichtung nach Anspruch 11, wobei der Beutel eine oder mehrere äußere Schichten aufweist, umfassend ein Material ausgewählt aus der Gruppe bestehend aus Polyethylen, Polypropylen, modifizierte Polyolefine, modifizierte Elastomere, Polystyrol, thermoplastisches Polyurethan, Copolyestergrenzmaterialien, phenoxy-artige Thermoplaste, Polyamide, Polyethylennaphthalat, Polyethylennaphthalat-Copolymere, Polyethylennaphthalat/Polyethylenterephthalatmischungen, Polyethylenterephthalat, verträglich gemachte Polymermischungen und Mischungen hiervon.

## Revendications

1. Procédé pour fabriquer et remplir des poches flexibles, le procédé comprenant :
le moulage par soufflage d'une ébauche (10, 100) ayant une partie de goulot (110) en une poche non autoporteuse flexible, compressible, ayant une finition de goulot (110) ;
le remplissage de ladite poche flexible avec un produit souhaité ; la fermeture ou le bouchage de la poche remplie ; dans lequel la partie de goulot (110) de l'ébauche (10, 100) et la poche sont utilisées pour manipuler l'ébauche (10, 100) et la poche pendant tout le procédé.

2. Procédé selon la revendication 1, lequel procédé comprend en outre la décoration et/ou l'habillage de la poche.

3. Procédé selon la revendication 2, dans lequel ladite poche est remplie (40) avant décoration et/ou habillage de la poche.

4. Procédé selon la revendication 1, lequel procédé comprend en outre le placement de la poche dans un récipient rigide (90).

5. Procédé selon la revendication 4, dans lequel la poche est supportée par le récipient.

6. Procédé selon la revendication 4, dans lequel ladite poche est remplie avant placement de la poche dans un récipient rigide (90).

7. Procédé selon la revendication 4, dans lequel ledit récipient rigide (90) est une boîte.

8. Procédé selon la revendication 1, dans lequel ladite poche a au moins une couche.

9. Procédé selon la revendication 8, dans lequel au moins une couche comprend du poly(téréphtalate d'éthylène) ou du polypropylène.

10. Procédé selon la revendication 1, dans lequel ladite poche a une ou plusieurs couches extérieures comprenant un matériau choisi dans le groupe constitué par le polyéthylène, le polypropylène, les polyoléfines modifiées, les élastomères modifiés, le polystyrène, le polyuréthane thermoplastique, les matériaux de barrière en copolyester, les thermoplastiques de type phénoxy, les polyamides, le poly(naphtalate d'éthylène), les copolymères de poly(naphtalate d'éthylène), les mélanges de poly(naphtalate d'éthylène)/poly(téréphtalate d'éthylène), le poly(téréphtalate d'éthylène), les mélanges de polymères rendus compatibles, et leurs combinaisons.

11. Dispositif pour fabriquer et remplir des poches flexibles comprenant : un système de manipulation (80) qui convoie des ébauches (10) et/ou des poches non autoporteuses, flexibles, compressibles, à travers un système de fabrication et de remplissage ; et un système de fabrication comprenant une machine de moulage par soufflage (20) ; un système de remplissage comprenant : une machine de remplissage (40), une machine de fermeture ou de bouchage (50) ; un système qui place la poche flexible dans un récipient rigide (90) ; dans lequel le système de manipulation (80) convoie les ébauches (10, 100) et les poches flexibles à travers tout le système par la partie de goulot (110) ; dans lequel ladite machine de moulage par soufflage (20) moule par soufflage une ébauche (10, 100) avec un goulot (110) en une poche flexible ayant un goulot (110) ; dans lequel ladite machine de remplissage (40) remplit une poche flexible avec un produit souhaité ; et dans lequel ladite machine de fermeture ou de bouchage (50) ferme une poche flexible remplie.

12. Dispositif selon la revendication 11, lequel dispositif comprend en outre un système qui décore et/ou habille la poche flexible.

13. Dispositif selon la revendication 12, dans lequel ledit système qui décore et/ou habille la poche est placé avant le système de remplissage (40).

14. Dispositif selon la revendication 11, dans lequel la poche flexible est supportée par le récipient.

15. Dispositif selon la revendication 11, dans lequel ledit système (80) qui place la poche flexible dans un récipient rigide (90) est placé avant le système de remplissage (40).

16. Dispositif selon la revendication 11, dans lequel ledit récipient rigide (90) est une boîte.

17. Dispositif selon la revendication 11, dans lequel ladite poche a au moins une couche.

18. Dispositif selon la revendication 17, dans lequel au moins une couche comprend du poly(téréphtalate d'éthylène) ou du polypropylène.

19. Dispositif selon la revendication 11, dans lequel ladite poche a une ou plusieurs couches extérieures comprenant un matériau choisi dans le groupe constitué par le polyéthylène, le polypropylène, les polyoléfines modifiées, les élastomères modifiés, le polystyrène, le polyuréthane thermoplastique, les matériaux de barrière en copolyester, les thermoplastiques de type phénoxy, les polyamides, le poly(naphtalate d'éthylène), les copolymères de poly(naphtalate d'éthylène), les mélanges de poly(naphtalate d'éthylène)/poly(téréphtalate d'éthylène), le poly(téréphtalate d'éthylène), les mélanges de polymères rendus compatibles, et leurs combinaisons.
